# EUROPÄISCHE PATENTSCHRIFT

(11) **EP 3 175 139 B1**
(45) Veröffentlichungstag und Bekanntmachung des Hinweises auf die Patenterteilung: **08.05.2019**
(21) Anmeldenummer: 15760080.0
(22) Anmeldetag: 30.06.2015
(51) Int. Cl.: F16F 15/123

(54) **ANORDNUNG FÜR EINE INDUKTIVE ENERGIEÜBERTRAGUNG**
ASSEMBLY FOR INDUCTIVE ENERGY TRANSFER
SYSTÈME DE BOBINES D'ÉMISSION POUR LE TRANSFERT D'ÉNERGIE PAR INDUCTION

(30) Priorität: 30.07.2014 DE 102014012786
(43) Veröffentlichungstag der Anmeldung: 07.06.2017
(73) Patentinhaber: Witech GmbH, 33739 Bielefeld (DE)
(72) Erfinder: BÜKER, Maik-Julian, 33190 Paderborn (DE); EUSKIRCHEN, Jörg, Rainer, 33739 Bielefeld (DE); SCHRÖDER, Dominik, 33098 Paderborn (DE)
(74) Vertreter: Bendele, Tanja
(86) Internationale Anmeldenummer: PCT/DE2015/000329
(87) Internationale Veröffentlichungsnummer: WO 2016/015697

(56) Entgegenhaltungen:
- WO-A1-2008/137996
- CN-A- 1 392 757
- US-A1- 2014 197 694

## Beschreibung

Die Erfindung betrifft eine Sende-Spulenanordnung für eine induktive Energieübertragung, aufweisend eine Vielzahl planarer, vereinzelter und gleichartiger Spulen, die in Reihen und Spalten einer Matrix angeordnet sind.

Für eine drahtlose Energieübertragung zwischen einer stationären Ladestation und einem beweglichen Verbraucher wird häufig die elektrische Induktion genutzt. So ist es beispielsweise aus der EP 1 318 260 A2 bei Toren bekannt, einen mit dem Torflügel beweglichen Akkumulator in einer bestimmten Position des Torflügels mittels induktiver Energieübertragung zu laden.

Ein anderes Anwendungsgebiet erläutert die US 7,576,514 B2.

Eine im wesentlichen flächenhaft sich erstreckende Ladestation mit einer Vielzahl von in Reihen und in Spalten einer Matrix angeordneten Sendespulen auf einem Träger dient dem Aufladen der Akkumulatoren von aufgelegten Mobiltelefonen, Tablets oder dergleichen. Durch mehrere Träger übereinander mit jeweils einer Matrix von Sendespulen mit einem zentralen, inneren Anschluss soll ein gleichförmiges magnetisches Feld induziert werden.

Ein solcher vielschichtiger Aufbau ist aufwendig und erzwingt die Spulenform mit einem mittigen, zentralen Anschluss eine Verschaltung jeweils unter einem Träger.

WO 2008/137996 A1 zeigt eine Spulenanordnung in Zeilen und Spalten.

US 2014/0197694 A1 zeigt Spulenanordnungen mit Durchkontaktierungen zwischen zwei Seiten eines Substrats.

Vor diesem Hintergrund macht die Erfindung es sich zur Aufgabe, eine Sendespulen-Anordnung der eingangs genannten Art zur Verfügung zu stellen, die wenig aufwendig eine vielfältige Verschaltung der einzelnen Spulen ermöglicht und die gleichzeitig über die Fläche ein homogenes Feld für eine induktive Energieübertragung mit einer großen Leistung erzeugt.

Gelöst wird diese technische Problematik bei einer Sende-Spulenanordnung für eine induktive Energieübertragung, aufweisend eine Vielzahl planarer und gleichartiger Spulen, die in Reihen und Spalten einer Matrix angeordnet sind, gemäß des Anspruchs 1 durch die Maßnahmen, dass jeweils eine Matrix von Spulen ober- und unterseitig eines Substrats vorgesehen ist, dass jede Spule einen zentralen Freiraum (12) belassende Windungen aufweist, dass eine Verschaltung der Spulen durch beidseits des Substrats aufgebrachte Leiterbahnen erfolgt, wozu der innere Anschluss einer Spule einer Matrix durch das Substrat durchkontaktiert mit einer die Windungen der Spule kreuzenden Leiterbahn in dem Freiraum einer Spule der anderen Matrix verbunden ist.

Es soll daraufhin gewiesen werden, dass die Bezeichnungen erste und zweite Matrix, Spalte und Reihe, sowie die Orientierung unter- bzw. oberseitig des Substrats austauschbar sind und hier sich lediglich zum besseren Verständnis an der Zeichnung orientieren.

Die Sende-Spulenanordnung nach der Erfindung weist eine Reihe von Vorteilen auf. So ist die Fertigung in Form einer gedruckten Schaltung auf einem geeigneten, an sich herkömmlichen Substrat unproblematisch. Weiter kann durch die Anordnung der Spulen und deren Form erreicht werden, dass ein weitgehend homogenes Feld für eine induktive Energieübertragung über den Spulen entsteht. Dabei ist die Verschaltung vergleichsweise problemlos, wenn auf dem Substrat entsprechende Leiterbahnen vorgesehen werden, die teils zwischen den Reihen bzw. den Spalten der Spulen einer Matrix verlaufen und teils in dem von den Spulenwindungen belassenen zentralen Freiraum, welche insbesondere dem Herausführen und dem Verschalten der inneren Anschlüsse von Spule dienen.

Weiter ist vorgesehen, dass der Mittelpunkt der von vier benachbarten, in zwei Reihen und zwei Spalten angeordneten Spulen einer Matrix aufgespannten Fläche und der Mittelpunkt des Freiraums der von der Fläche der vier Spulen überdeckten Spule der anderen Matrix auf einer Achse liegen derart, dass die Windungen der vier Spulen abschnittsweise über dem Freiraum der überdeckten Spule verlaufen und sich die Windungen der vier Spulen in einer Projektion jeweils mit den Windungen der überdeckten Spule zweimal vollständig schneiden.

Trotz des von den Spulen belassenen Freiraums, der das Aufbringen von Leiterbahnen für das Verschalten der Spulen erlaubt, wird eine für die induktive Energieübertragung aktive Fläche geschaffen, die sehr gleichmäßig mit den Windungen der Spulen belegt ist. Solches ermöglicht eine vergleichsweise hohe Energieübertragung.

Dabei kann in weiterer Ausgestaltung vorgesehen sein, dass die Reihen und Spalten jeweils gleich beabstandet sind, dass eine erste Symmetrieachse einer Spalte von Spulen einer ersten Matrix mit der Mittellinie zwischen zwei Spalten von Spulen der zweiten Matrix zusammenfällt und dass eine zweite Symmetrieachse einer Reihe von Spulen der ersten Matrix mit der Mittellinie zwischen zwei Reihen von Spulen der zweiten Matrix zusammenfällt.

Zweckmäßigerweise sind die Spulen als Vielecke ausgebildet, so dass eine hohe Packungsdichte der Windungen der oberen und unteren Spulen auf dem Träger erreicht werden kann.

Sind vorzugsweise die Spulen rechteckig ausgebildet, so finden sich dann, gleichmäßig verteilt, über dem Freiraum einer Spule einer Matrix Abschnitte der Windungen in Form der vier Ecken der vier Spulen der anderen Matrix. Dabei sind die Abschnitte der Windungen der vier Spulen über ihre Breite vollständig innerhalb des Freiraums der die vier Ecken überdeckenden Spule angeordnet.

Ein besonderer Vorteil dieser Anordnung ist die geringe elektrische Kopplung zwischen vier Spulen einer Matrix und der von den vier Spulen überdeckten Spule der anderen Matrix, die geringer bemessen ist als 3%.

Für eine Verschaltung der Spulen kann vorgesehen sein, dass die außenliegenden Anschlüsse der Spulen einer Spalte der ersten Matrix durch eine gemeinsame Leiterbahn auf dem Substrat verbunden sind. Von Vorteil für die weitere Verschaltung ist, dass die innenliegenden Anschlüsse der Spule einer Reihe der ersten Matrix durch das Substrat durchkontaktiert durch eine unterseitige Leiterbahn verbunden sind, die, mit Ausnahme randseitiger Spulen, zwischen zwei Reihen von Spulen der zweiten Matrix verläuft. Die Windungen der Spulen überbrückende isolierte Drähte oder eine Verschaltung ausschließlich an einer Unterseite eines Substrats sind so vermieden.

Des weiteren ist vorgesehen, dass die äußeren Anschlüsse der Spulen einer Spalte der zweiten Matrix durch das Substrat durchkontaktiert mit der die äußeren Anschlüsse der Spulen der ersten Matrix verbindenden Leiterbahn auf dem Substrat verbunden sind. Es können ferner die inneren Anschlüsse der Spulen einer Reihe der zweiten Matrix jeweils durchkontaktiert mit einer oberseitigen Leiterbahn auf dem Substrat innerhalb eines Freiraums einer Spule der ersten Matrix verbunden werden, durch die die unterseitigen Windungen der jeweiligen Spule überbrückt werden. Ein weiteres mal durchkontaktiert wird diese Leiterbahn mit einer die inneren Anschlüsse der Spulen einer Reihe der zweiten Matrix dann verbindenden, unterseitigen Leiterbahn auf dem Substrat noch verbunden.

Dies ermöglicht, dass ein gemeinsamer Anschluss einer Reihe von Spulen und der gemeinsame Anschluss einer Spalte von Spulen einer Matrix jeweils einen Schalter aufweisen kann, mithin jede Spule der Matrix einzeln geschaltet werden kann, ganze Reihen oder ganze Spalten. Weist die Matrix n x n Spulen auf, so bedarf es bei einer derartigen Anordnung lediglich zwei n an Schaltern.

Alternativ und bevorzugt können die Spulenanschlüsse auch einzeln aus der Spulenanordnung herausgeführt werden, wenn vorgesehen ist, dass der innenliegende Anschluss einer oberseitigen Spule in dem Freiraum einer unterseitigen Spule durch das Substrat durchkontaktiert mit einer unterseitig die oberseitige Spulenwindung kreuzenden Leiterbahn verbunden ist und die Leiterbahn in dem Zwischenraum zwischen zwei Spalten oder Reihen von oberseitigen Spulen erneut durchkontaktiert mit einer zwischen zwei oberseitigen Spalten oder Reihen von Spulen verlaufenden Leiterbahn verbunden ist.

Mit zu den äußeren Anschlüssen der Spulen verlaufenden Leiterbahnen zwischen zwei Reihen oder Spalten von Spulen können damit die Anschlüsse der Spulen vereinzelt über den Rand der Spulenanordnung hinweg geführt und an dem Rand des Substrats paarweise in einer Kontaktleiste enden, so dass von einem Mikroprozessor einer an die Kontaktleiste angeschlossenen elektronischen Schaltung gesteuert jede Spule einzeln geschaltet werden kann.

Es kann damit die Spulenanordnung sehr flach gehalten werden, mit einer im wesentlichen von dem Substrat mit aufgebrachten Leiterbahnen in der Dicke bestimmt. Außerhalb der Spulenanordnung, insbesondere auf einer vorspringenden Zunge mit der Kontaktleiste, können gegebenenfalls elektronische Bauteile noch vorgesehen sein, vorzugsweise in einer SMD-Technik und damit sehr flach. Dazu kann weiter vorgesehen sein, dass für jede Spule zwischen der Kontaktleiste und dem Rand der Spulenanordnung eine Leiterbahnunterbrechung eines Anschlusses vorgesehen ist, die von einem Kondensator überbrückt wird. Es sind dann auf dem Substrat lediglich die Schaltungen von Schwingkreisen vorhanden, die von einer abgesetzten elektronischen Schaltung angesteuert werden.

Weiter kann vorgesehen sein, dass eine erste Matrix I-Zeilen und J-Spalten aufweist, dass die zweite Matrix (I+1)-Zeilen und (J+1)-Spalten aufweist, und dass der Mittelpunkt der beiden Matrizen auf einer gemeinsamen Achse liegt. Aufgrund der Symmetrieeigenschaften kann damit auch bei kleineren Spulenabmessungen eine große Leistungshomogenität erreicht werden.

Das Wesen der Erfindung wird anhand der Zeichnung näher erläutert, in der lediglich Ausführungsbeispiele schematisch dargestellt sind. In der Zeichnung zeigt:
- Fig. 1:: eine Draufsicht auf ein Substrat mit aufgebrachter Spulenanordnung,
- Fig. 2:: einen vergrößerten Ausschnitt aus Figur 1,
- Fig. 3:: vereinfacht einen Schaltplan,
- Fig. 4:: eine weitere Draufsicht auf ein Substrat mit aufgebrachter Spulenanordnung,
- Fig. 5:: ausschnittsweise eine Vergrößerung der Draufsicht nach Figur 4,
- Fig. 6:: vereinfacht einen Schaltplan und
- Fig. 7:: ein weiteres Spulenlayout.

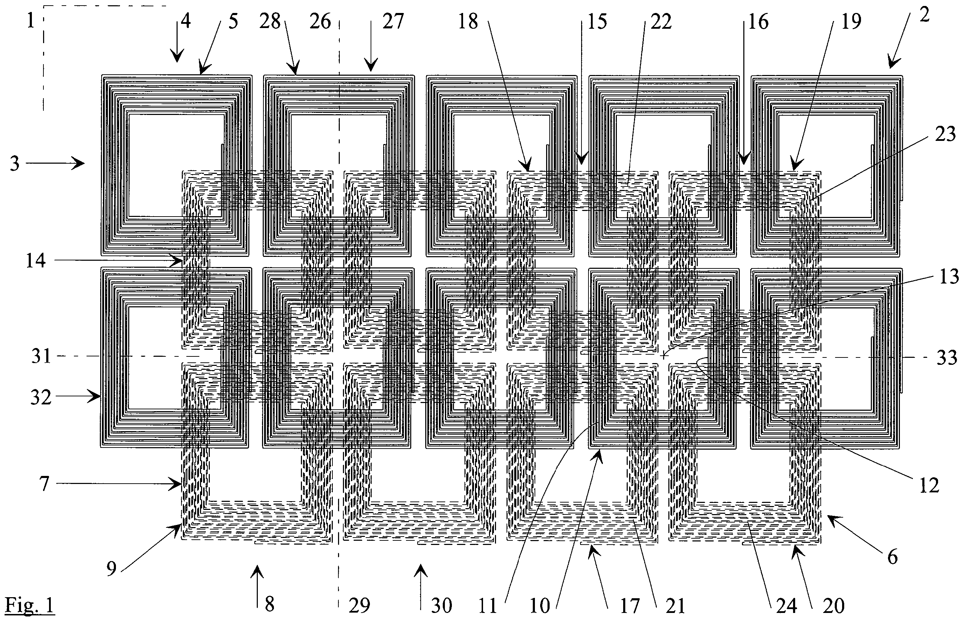

Figur 1 zeigt in einer Draufsicht auf ein nur angedeutetes Substrat 1 eine erste Matrix 2 mit einer Vielzahl von in Reihen 3, beispielhaft dargestellt lediglich zwei, und Spalten 4, lediglich dargestellt fünf, angeordneten, gleichartigen Spulen 5. Beispielhaft dargestellt ist somit eine Matrix 2 mit 2 x 5 Spulen 5.

Die Spulen 5 sind bspw. in an sich üblicher Weise als gedruckte Schaltung auf einer Platine als Substrat 1 aufgebracht, gegebenenfalls auf einer Folie oder dergleichen.

Entsprechendes gilt für die Unterseite des Substrats 1, auf der eine zweite Matrix 6 mit in Reihen 7 und Spalten 8 angeordneten Spulen 9 aufgebracht ist, hier beispielhaft dargestellt in einer 2 x 4 Matrix 6 mit acht Spulen 9.

In Figur 1 nicht dargestellt sind beidseits des Substrats 1 aufgebrachte Leiterbahnen, die dem Verschalten der Spulen 5,9 dienen.

Die Spulen 5,9 sind gleichartig ausgebildet und weisen eine rechteckige Grundform auf, deren Abmessungen zwischen 5 cm und 10 cm in der Länge und zwischen 4,5 cm und 8,5 cm in der Breite betragen. Die Windungsanzahl, abhängig von der Betriebsfrequenz, beträgt bei dem dargestellten Ausführungsbeispiel 10.

Die Spulenanordnung wird stellvertretend anhand der Spule 10 der ersten Matrix 2 weiter erläutert. Die Windungen 11 der Spule 10 belassen einen zentralen Freiraum 12. Der Mittelpunkt 13 der von den vier benachbarten, in den Reihen 7 und 14 und den Spalten 15,16 aufgespannten Fläche der darunter angeordneten vier Spulen 17-20 der zweiten Matrix 6 fällt in der Draufsicht mit dem Mittelpunkt 13 der Freifläche 12 der Spule 10 zusammen.

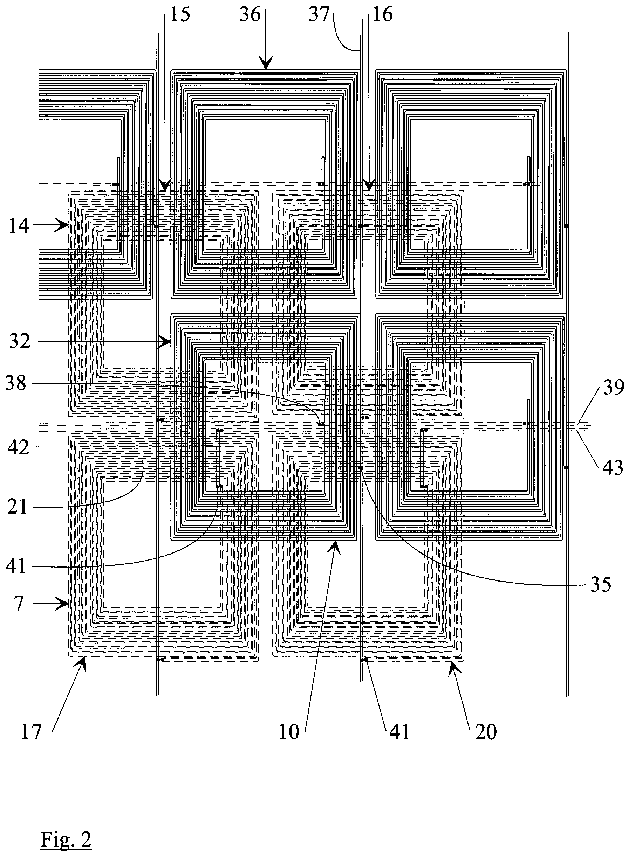

Die Windungen 21-24 der Spulen 17-20 verlaufen abschnittsweise über den Freiraum 12 der Spule 10 und schneiden in der Draufsicht gemäß Figur 1 die Windungen 11 der Spule 10 jeweils zweimal vollständig. Damit liegen die über dem Freiraum 12 verlaufenden Abschnitte der Windungen 21-24 über ihre gesamte Breite innerhalb des Freiraums 12, wobei die innersten Windungen soweit beabstandet sind, dass zwischen diesen Windungen eine Durchkontaktierung erfolgen und eine Leiterbahn aufgebracht werden kann, wie anhand der Fig. 2 noch erläutert wird. Durch diese überlappende Anordnung der Spulen kommt es zu einer weitgehend gleichmäßigen Verteilung von Windungen über die gesamte aktive Fläche des Substrats 1, die einer induktiven Energieübertragung dient.

Insbesondere zeigt Figur 1 weiter auf, dass die Reihen 3,32 der ersten Matrix 2 und die Reihen 7,14 der zweiten Matrix 6 gleich beabstandet sind wie auch deren Spalten 4,27 bzw. 15,16.

Damit fällt eine erste Symmetrieachse 26 einer Spalte 27 von Spulen 28 der ersten Matrix 2 mit der Mittellinie 29 zwischen zwei Spalten 8,30 der zweiten Matrix 6 zusammen. Eine zweite Symmetrieachse 31 einer Reihe 32 der Spulen 10 der ersten Matrix 2 fällt mit der Mittellinie 33 zwischen den zwei Reihen 7,14 der zweiten Matrix 6 zusammen.

Infolge dieser Maßnahmen ist die elektrische Kopplung zwischen beispielhaft den vier Spulen 17-20 der zweiten Matrix 6 und der Spule 10 der ersten Matrix 2 geringer bemessen als 3%.

Die inneren wie äußeren Anschlüsse der Spulen einer Reihe bzw. einer Spalte liegen dabei jeweils auf einer Linie.

So kann der außenliegende Anschluss 35 der Spule 10 mit den übrigen außenliegenden Anschlüssen der weiteren Spulen der Spalte 36 mit einer oberseitig auf dem Substrat 1 aufgebrachten Leiterbahn 37 verbunden werden, dargestellt durch die gefüllten Rechtecke in der vergrößerten Darstellung gemäß Figur 2.

Der innenliegende Anschluss 38 der Spule 10 ist durch das Substrat 1 durchkontaktiert, dargestellt durch zwei gefüllte Kreise, mit einer unterseitigen Leiterbahn 39 verbunden, die zwischen den Reihen 7,14 der zweiten Matrix 6 verläuft. Mit dieser Leiterbahn 39 sind auch die weiteren inneren Anschlüsse der Spulen in der Reihe 32 verbunden.

Der äußeren Anschluss 41 der Spule 20 wie auch die übrigen äußeren Anschlüsse der Spulen der Spalte 16 der zweiten Matrix 6 sind durch das Substrat 1 durchkontaktiert mit dem die äußeren Anschlüsse 35 der Spulen 10 in der Spalte 36 der ersten Matrix 2 verbindenden Leiterbahn 37 verbunden.

Der innere Anschluss 41 der Spule 17 ist durch das Substrat 1 durchkontaktiert mit einer oberseitigen Leiterbahn 42 verbunden. Mit der in dem Freiraum 12 der Spule 10 verlaufenden Leiterbahn 42 werden die Windungen 21 der Spule 17 überbrückt. Erneut durchkontaktiert und mit einer unterseitigen, zwischen den Reihen 7, 14 verlaufenden Leiterbahn 43 sind so die inneren Anschlüsse der Spulen der Reihe 7 der zweiten Matrix 6 verbunden.

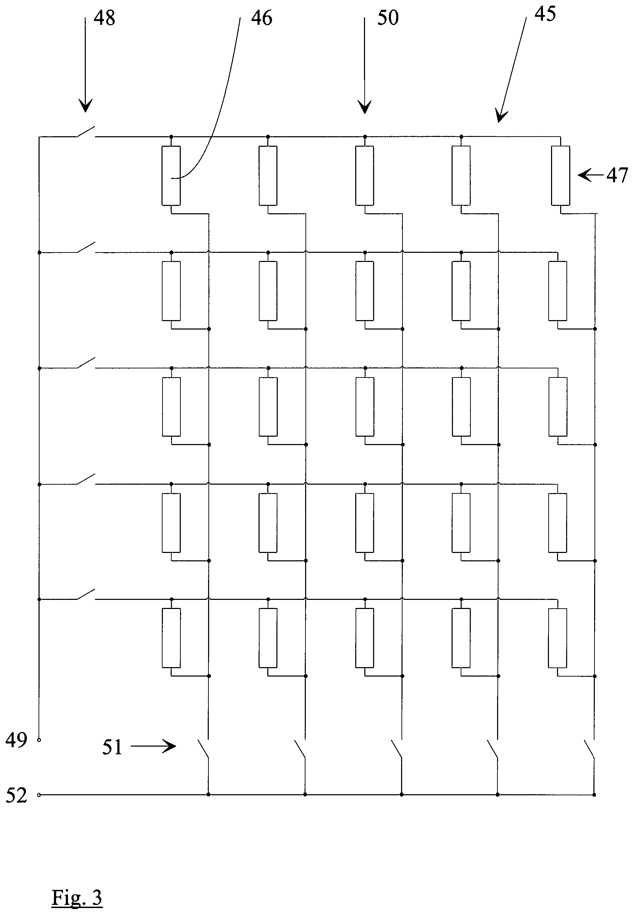

Eine entsprechende Verschaltung von einer Matrix 45 mit beispielhaft 5 x 5 Spulen 46 zeigt der Schaltplan gemäß Figur 3. In jeder Reihe 47 wird ein Anschluss einer Spule 46 über einen Schalter 48 an einen Pol 49 der Speisespannung geschaltet. In Spalten 50 angeordnet wird der zweite Anschluss der Spulen 46 über einen Schalter 51 an den zweiten Pol 52 der Speisespannung geschaltet. Mit lediglich zehn Schaltern 48,51 können damit 25 Spulen 46 einzeln geschaltet werden. Ebenso ist es möglich, mit lediglich zwei Schaltern 48,51 jeweils eine Reihe 47 oder eine Spalte 50 zu schalten.

Vielfältige Kombinationen sind je nach Schalterstellung weiter möglich.

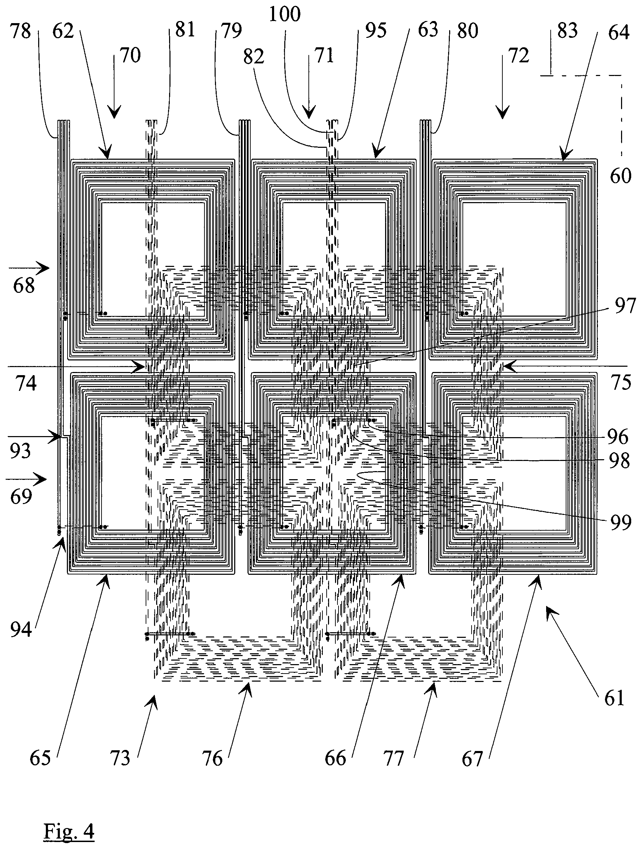

Figur 4 zeigt in einer Draufsicht ein lediglich angedeutetes Substrat 60 mit einer oberseitigen Matrix 61 mit sechs gleichartig ausgebildeten Spulen 62-67 in zwei Reihen 68,69 und drei Spalten 70-72.

Unterseitig des Substrats 60 ist eine 2 x 2 Matrix 73 mit vier Spulen 74-77 angedeutet.

Die Anordnung der oberseitigen Spulen 62-67 mit Bezug auf die unterseitigen Spulen 74-77 entspricht dem vorangegangenen Ausführungsbeispiel.

Es sind jedoch die Anschlüsse 78-82 der Spulen 62-67 bzw. der Spulen 74-77 vereinzelt über den Rand der Spulenanordnung geführt und enden an einem Rand 83 des Substrats 60 in einer Kontaktleiste für ein weiteres Verschalten, in der Zeichnung nicht dargestellt.

Außerhalb der Spulenanordnung kann auch weiter vorgesehen sein, dass eine Leiterbahn jeweils einer Spule unterbrochen ist und diese Unterbrechung dann von einem Kondensator überbrückt wird, so dass in Verbindung mit der Spule ein Schwingkreis ausgebildet wird.

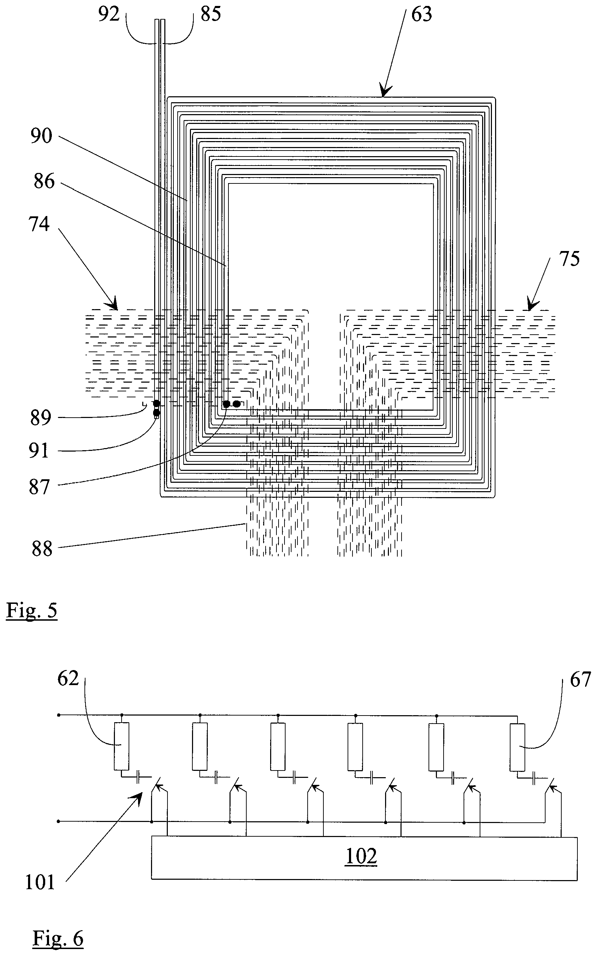

Wie die vergrößerte Darstellung gemäß Figur 5 zeigt, kann der äußere Anschluss der Spule 63 unmittelbar als Leiterbahn 85 zwischen den Spalten 70,71 der Matrix 61 herausgeführt werden. Der innere Anschluss 86 weist eine Durchkontaktierung 87 durch das Substrat auf. Dieses Durchkontaktierung 86 erfolgt in dem Freiraum 88 der Spule 74. Mittels einer unterseitigen Leiterbahn 89 werden die oberseitigen Windungen 90 der Spule 63 überbrückt. Bei dem Ausführungsbeispiel erfolgt eine weitere Durchkontaktierung 91 und erfolgt eine Beschaltung des inneren Anschlusses 86 über eine oberseitige Leiterbahn 92, die unmittelbar neben der Leiterbahn 85 angeordnet ist.

Alternativ könnte diese Leiterbahn auch unterseitig zum Rand 83 hin führen.

Parallel zu den Leiterbahnen 85,92 verlaufen die Leiterbahnen für die Spulenanschlüsse der Spulen 65-67 der zweiten Spulenreihe 69, deren Anschluss-Leiterbahnen entsprechend jeweils einen Versatz 93,94 aufweisen, vergleiche Figur 4 bei der Spule 65.

Das Voranstehende gilt auch für die Anschlüsse 81,82 der unterseitigen Spulen 74-77. So erfolgt der äußere Anschluss der Spule 75 über die in Figur 4 rechte Leiterbahn 95 der Anschlüsse 82. Der innere Anschluss weist eine Durchkontaktierung 96 auf und werden die Windungen 97 der Spule 75 durch eine oberseitige Leiterbahn 98 in dem Freiraum 99 der Spule 66 überbrückt. Erneut durchkontaktiert erfolgt der Anschluss über die hin zu dem Rand 83 geführte unterseitige Leiterbahn 100, in Fig. 4 die zweite von rechts, so dass die einem Anschluss der Spule 77 dienenden Leiterbahnen 98,100 unmittelbar benachbart verlaufen.

Ein derartiges Layout ermöglicht die unmittelbare Ansteuerung der einzelnen Spulen 62-67 gemäß Figur 6, dargestellt für die obere Spulenmatrix 61 mit sechs Spulen 62-67. Jede Spule 62-67 ist über einen eigenen elektronischen Schalter 101 schaltbar. Gesteuert werden die sechs Schalter 101 für die Spulen 62-67 mittels eines Mikrokontrollers 102.

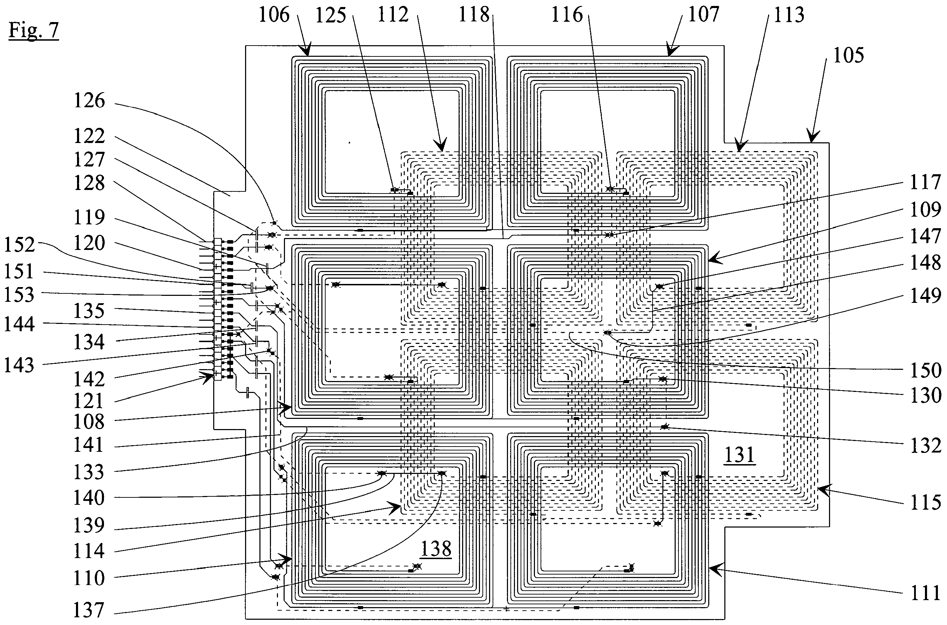

Das voranstehend Gesagte gilt auch für das Spulenlayout gem. Figur 7. Dort sind auf einem Substrat 105 oberseitig sechs Spulen 106-111 in einer 2 x 3 Matrix angeordnet. Diese die Spulen 106-111 dieser Matrix überlappen, jeweils teilweise, mit unterseitig des Substrats 105 angeordneten Spulen 112-115, angeordnet in einer 2 x 2 Matrix.

In der Figur 7 sind Durchkontaktierungen, zumeist zweifach, durch ein mit einem Kreuz versehenen Quadrat dargestellt. Rechtecke geben sowohl den inneren wie auch den äußeren Spulenanschluss wieder.

Die inneren Anschlüsse der Spulen 106,107 sind durch kurze Leiterbahnabschnitte verlängert. Durch eine solche Verlängerung wird erreicht, dass eine Durchkontaktierung 116 des inneren Anschlusses der Spule 107 zwischen den Spulen 112, 113 der unteren Matrix erfolgt. Unterseitig kreuzt eine weitere Leiterbahn die oberseitigen Spulenwindungen der Spule 107 zwischen den Spulen 112,113 und erfolgt eine weitere Durchkontaktierung 117 zwischen den oberseitigen Spulen 107,109. Eine weitere Leiterbahn 118 zwischen den beiden Reihen der Spulen 106,107 und 108,109 führt an einen nur sinnbildlich wiedergegebenen Kondensator 119, durch den eine nicht dargestellte Leiterbahnunterbrechung überbrückt wird.

Damit erfolgt die Beschaltung des inneren Anschlusses der Spule 107 über einen Steckkontakt 120 einer Steckerleiste 121. Die Steckerleiste 121 ist auf einem Ansatz 122 des Substrats 105 angeordnet, so dass ein herkömmlicher Einschub ermöglicht ist.

Vergleichbares gilt für den inneren Anschluss der Spule 106, dessen Durchkontaktierung 125 weitgehend frei bleiben kann, da die Unterseite des Substrats 105 dort weitgehend frei von Spulen 112-115 ist. So kann auch die unterseitig Leiterbahn bis zu der Durchkontaktierung 126 kurz vor Ansatz 122 verlaufen. Oberseitig wird dann eine Leiterbahnunterbrechung von einem Kondensator 127 überbrückt und erfolgt die Beschaltung des inneren Anschlusses der Spule 106 über den Kontaktstift 128.

Die äußeren Anschlüsse der Spulen 106, 107 wie auch die der weiteren Spulen 108-111 sind zusammengeschaltet und beispielsweise auf Masse gelegt.

Die Verschaltung der inneren Anschlüsse der Spulen 108,110 entspricht weitgehend der der Spule 106.

Die Durchkontaktierung 130 für den inneren Anschluss der Spule 109 erfolgt in dem Freiraum 131 der darunterliegenden Spule 115. Nach einer weiteren Durchkontaktierung 132 zwischen den oberen Spulen 109, 111 erfolgt die weitere Beschaltung über die Leiterbahn 133, den Kondensator 134 und damit letztlich über den Kontaktstift 135.

Die äußeren Anschlüsse der unterseitigen Spulen 112-115 sind mit den äußeren Anschlüssen der oberen Spulen 106-111 zusammengeschaltet.

Die inneren Anschlüsse der unterseitigen Spulen 112-115 werden durch Leiterbahnen soweit verlängert, dass beispielsweise eine Durchkontaktierung 137 der Spule 114 in dem Freiraum 138 der darüberliegenden Spule 110 erfolgt. Eine weiter in diesem Freiraum 138 eingebrachte Leiterbahn 139 kreuzt oberseitig die unterseitigen Windungen der Spule 114. Nach einer weiteren Durchkontaktierung 140 kreuzt dann eine unterseitige Leiterbahn 141 die oberseitigen Windungen der Spule 110. Letztmals erfolgt eine Durchkontaktierung 142, so dass über einen Kondensator 143 und einen Kontaktstift 144 die Beschaltung des inneren Anschlusses der Spule 114 erfolgen kann.

Entsprechendes gilt für die Spulen 113,115 mit dem Unterschied, dass nach einer Durchkontaktierung 147 für den inneren Anschluss der Spule 105 in dem Freiraum der oberseitigen Spule 109 eine Leiterbahn 148 derart verläuft, dass die anschließende, erneute Durchkontaktierung 149 zwischen den Spulenreihen mit den Spulen 112,113 bzw. 114, 115 erfolgt. Zwischen diesen beiden Spulenreihen verläuft dann eine weitere, unterseitige Leiterbahn 150. Für einen oberseitigen Anschluss über den Kontaktstift 151 und den Kondensator 152 ist eine letzte Durchkontaktierung 153 noch vorgesehen.

## Patentansprüche

1. Sende-Spulenanordnung für eine induktive Energieübertragung, aufweisend eine Vielzahl planarer und gleichartiger Spulen, die in Reihen und Spalten einer Matrix angeordnet sind, wobei jeweils eine Matrix (2,6) von Spulen (5,9) ober- und unterseitig eines Substrats (1) vorgesehen ist, dass jede Spule (10) einen zentralen Freiraum (12) belassende Windungen (11) aufweist, dass eine Verschaltung der Spulen (5,9) durch beidseits des Substrats (1) aufgebrachte Leiterbahnen (37,42,-39, 43) erfolgt, wozu der innere Anschluss (41) einer Spule (17) einer Matrix (6) durch das Substrat (1) durchkontaktiert mit einer die Windungen (21) der Spule (17) kreuzenden Leiterbahn (42) in dem Freiraum (12) einer Spule (10) der anderen Matrix (2) verbunden ist,
**dadurch gekennzeichnet, dass**
der innen liegende Anschluss (86) einer oberseitigen Spule (63) in dem Freiraum (88) einer unterseitigen Spule (74) durch das Substrat durchkontaktiert mit einer unterseitig die oberseitige Windungen (90) kreuzenden Leiterbahn (89) verbunden ist und dass die Leiterbahn (89) in dem Zwischenraum zwischen zwei Spalten (70,71) oder Reihen von oberseitigen Spulen (62,65; 63,66) erneut durchkontaktiert mit einer zwischen den zwei oberseitigen Spalten (70,71) oder Reihen von Spulen (62,65; 63,66) verlaufenden Leiterbahn (92) verbunden ist, wobei die Leiterbahnen für die Anschlüsse (78-82) der Spulen (62-67; 74-77) vereinzelt über den Rand der Spulenanordnung hinweg geführt werden und am Rand (83) des Substrats (60) paarweise in einer Kontaktleiste enden und dass von einem Mikroprozessor (102) einer an die Kontaktleiste angeschlossenen elektronischen Schaltung gesteuert jede Spule (62-67; 74-77) einzeln geschaltet wird, wobei für jede Spule zwischen der Kontaktleiste und dem Rand der Spulenanordnung eine Leiterbahnunterbrechung eines Anschlusses vorgesehen ist, die von einem Kondensator überbrückt wird, sodass jeweils in Verbindung mit der Spule ein Schwingkreis ausgebildet wird.

2. Spulenanordnung nach Anspruch 1, **dadurch gekennzeichnet, dass** der Mittelpunkt (13) der von vier benachbarten, in zwei Reihen (7,14) und zwei Spalten (15,16) angeordneten Spulen (17-20) einer Matrix (6) aufgespannten Fläche und der Mittelpunkt (13) des Freiraums (12) der von der Fläche der vier Spulen (17-20) überdeckten Spule (10) der anderen Matrix (2) auf einer Achse liegen derart, dass die Windungen (21-24) der vier Spulen (17-20) abschnittsweise über dem Freiraum (12) der überdeckten Spule (10) verlaufen und sich die Windungen (21-24) der vier Spulen (17-20) in einer Projektion jeweils mit den Windungen (11) der überdeckten Spule (10) zweimal vollständig schneiden.

3. Spulenanordnung nach einem oder mehreren der vorangehenden Ansprüche, **dadurch gekennzeichnet, dass** die Reihen (3,32;7,14) und Spalten (4,27;8,30) jeweils gleich beabstandet sind, dass eine erste Symmetrieachse (26) einer Spalte (27) von Spulen (28) einer ersten Matrix (2) mit der Mittellinie (29) zwischen zwei Spalten (8,30) von Spulen der zweiten Matrix (6) zusammenfällt und dass eine zweite Symmetrieachse (31) einer Reihe (32) von Spulen (10) der ersten Matrix (2) mit der Mittellinie (33) zwischen zwei Reihen (7,14) von Spulen der zweiten Matrix (6) zusammenfällt.

4. Spulenanordnung nach einem oder mehreren der vorangehenden Ansprüche, **dadurch gekennzeichnet, dass** die Spulen (5,9) als Vielecke ausgebildet sind.

5. Spulenanordnung nach einem oder mehreren der vorangehenden Ansprüche, **dadurch gekennzeichnet, dass** die elektrische Kopplung zwischen vier Spulen (17-20) einer Matrix (6) und der von den vier Spulen (17-20) überdeckten Spule (10) der anderen Matrix (2) geringer bemessen ist als 3%.

6. Spulenanordnung nach einem oder mehreren der vorangehenden Ansprüche, **dadurch gekennzeichnet, dass** die außen liegenden Anschlüsse (35) der Spulen (10) einer Spalte (36) einer ersten Matrix (2) durch eine gemeinsame Leiterbahn (37) auf dem Substrat (1) verbunden sind und dass die innen liegenden Anschlüsse (38) der Spulen (10) einer Reihe (32) der ersten Matrix (2) durch dass Substrat (1) durchkontaktiert durch eine unterseitige Leiterbahn (39) verbunden sind.

7. Spulenanordnung nach einem oder mehreren der vorangehenden Ansprüche, **dadurch gekennzeichnet, dass** die äußeren Anschlüsse (41) der Spulen (20) einer Spalte (16) der zweiten Matrix (6) durchkontaktiert mit der die äußeren Anschlüsse (35) der Spulen (10) der ersten Matrix (2) verbindenden Leiterbahn (37) auf dem Substrat (1) verbunden sind, dass die inneren Anschlüsse (41) der Spulen (17) einer Reihe (15) der zweiten Matrix (6) jeweils durchkontaktiert mit einer oberseitigen Leiterbahn (42) auf dem Substrat (1) innerhalb eines Freiraums (12) einer Spule (10) der ersten Matrix (2) verbunden sind, dass die Leiterbahnen (42) die unterseitigen Windungen (21) der jeweiligen Spule (17) überbrücken und jeweils ein weiteres mal durchkontaktiert mit einer die inneren Anschlüsse der Spulen dieser Reihe (7) der zweiten Matrix (6) dann verbindenden, unterseitigen Leiterbahn (43) auf dem Substrat (1) verbunden sind.

8. Spulenanordnung nach einem oder mehreren der vorangehenden Ansprüche, **dadurch gekennzeichnet, dass** eine Reihe (47) von Spulen (49) jeweils einen gemeinsamen Anschluss und eine Spalte (50) von Spulen (49) jeweils einen gemeinsamen Anschluss aufweisen und dass die gemeinsamen Anschlüsse jeweils einen Schalter (48,51) aufweisen.

9. Spulenanordnung nach einem oder mehreren der vorangehenden Ansprüche, **dadurch gekennzeichnet, dass** eine erste Matrix I-Zeilen und J-Spalten aufweist, dass die zweite Matrix (1+1) -Zeilen und (J+I) -Spaltenaufweist, und dass der Mittelpunkt der beiden Matrizen auf einer gemeinsamen Achse liegt.

## Claims

1. Transmitter coil arrangement for an inductive energy transfer having a plurality of planar and similar coils being arranged in rows and columns of a matrix, wherein one matrix (2,6) of coils (5,9) is respectively provided on the upper side and the lower side of a substrate (1), that each coil (10) has windings (11) keeping a central open space (12), that interconnection of the coils (5,9) is carried out by conducting paths (37,42,39,43) being applied on both sides of the substrate (1), wherefore the inner connection (41) of a coil (17) of a matrix (6), connected through the substrate (1), is connected to a conducting path (42) in the open space (12) of a coil (10) of the other matrix (2) intersecting the windings (21) of the coil (17),
**characterised in that**
the internal connection (86) of an upper-side coil (63), connected through the substrate, is connected to a conducting path (89) intersecting the upper-side windings (90) on the lower side in the open space (88) of a lower-side coil (74), and that, in the interspace between two columns (70,71) or rows of upper-side coils (62,65;63,66), the conducting path (89), connected through again, is connected to a conducting path (92) running between the two upper-side columns (70,71) or rows of coils (62,65;63,66), wherein the conducting paths for the connections (78-82) of the coils (62-67;74-77) are occasionally guided beyond the edge of the coil arrangement and pairwisely end in a contact strip at the edge (83) of the substrate, and that each coil (62-67;74-77) is individually connected, controlled by a microprocessor (102) of an electric circuit which is connected to the contact strip, wherein, for each coil, a conducting path recess of a connection which is bypassed by a capacitor is provided between the contact strip and the edge of the coil arrangement such that an oscillating circuit is formed in conjunction with the coil respectively.

2. Coil arrangement according to claim 1, **characterised in that** the center (13) of the area which is spanned by four adjacent coils (17-20) of a matrix (6) being arranged in two rows (7,14) and two columns (15,16) and the center (13) of the open space (12) of the coil (10) of the other matrix (2) which is overlapped by the four coils (17-20) are arranged on a common axis such that the windings (21-24) of the four coils (17-20) sectionally run across the open space (12) of the overlapped coil (10) and the windings (21-24) of the four coils (17-20) completely intersect twice in a projection with the windings (11) of the overlapped coil (10) respectively.

3. Coil arrangement according to one or more of the preceding claims, **characterised in that** the rows (3,32;7,14) and columns (4,27;8,30) are equally spaced respectively, that a first axis of symmetry (26) of a column (27) of coils (28) of a first matrix (2) coincides with the center line (29) between two columns (8,30) of coils of the second matrix (6), and that a second axis of symmetry (31) of a row (32) of coils (10) of the first matrix (2) coincides with the center line (33) between two rows (7,14) of coils of the second matrix (6).

4. Coil arrangement according to one or more of the preceding claims, **characterised in that** the coils (5,9) are formed as polygons.

5. Coil arrangement according to one or more of the preceding claims, **characterised in that** electric coupling between four coils (17-20) of a matrix (6) and the coil (10) of the other matrix (2) which is overlapped by the four coils (17-20) is calculated less than 3%.

6. Coil arrangement according to one or more of the preceding claims, **characterised in that** the external connections (35) of the coils (10) of a column (36) of a first matrix (2) are connected by a common conducting path (37) on the substrate (1), and that the internal connections (38) of the coils (10) of a row (32) of the first matrix (2), connected through the substrate (1), are connected by a lower-side conducting path (39).

7. Coil arrangement according to one or more of the preceding claims, **characterised in that** the external connections (41) of the coils (20) of a column (16) of the second matrix (6), connected trough, are connected to the conducting path (37) on the substrate (1) which connects the external connections (35) of the coils (10) of the first matrix (2), that the internal connections (41) of the coils (17) of a row (15) of the second matrix (6), each connected trough, are connected to an upper-side conducting path (42) on the substrate (1) within an open space (12) of a coil (10) of the first matrix (2), that the conducting paths (42) bridge the lower-side windings (21) of the respective coil (17) and, each connected through one more time, are connected to a lower-side conducting path (43) on the substrate (1) which then connects the internal connections of the coils of this row (7) of the second matrix (6).

8. Coil arrangement according to one or more of the preceding claims, **characterised in that** a row (47) of coils (49) has a common connection respectively and a column (50) of coils (49) has a common connection respectively, and that the common connections have a switch (48,51) respectively.

9. Coil arrangement according to one or more of the preceding claims, **characterised in that** a first matrix has I-rows and J-columns, that the second matrix has (1+1)-rows and (J+I)-columns, and that the center of the two matrices is arranged on a common axis.

## Revendications

1. Disposition de bobines émettrices pour la transmission d'énergie inductive ayant une pluralité des bobines planes est similaires étant arrangées en lignes et colonnes d'une matrice, dans laquelle une matrice (2,6) des bobines (5,9) respectivement est fournie respectivement sur le côté supérieur et inférieur d'un substrat (1), que chacune bobine (10) a des enroulements (11) gardant un espace ouvert centrale (12), qu'une interconnexion des bobines (5,9) est effectuée par des pistes conductrices (37,42,39,43) étant appliquées sur les deux côtés du substrat (1), donc la raccordement intérieure (41) d'une bobine (17) d'une matrice (6), connectée au travers du substrat (1), est connectée à une piste conductrice (42) dans l'espace ouvert (12) d'une bobine (10) de l'autre matrice (2) croisant les enroulements (21) de la bobine (17),
**caractérisée en ce que**
la raccordement intérieure (86) de la bobine supérieure (63), connectée au travers du substrat, est connectée à une piste conductrice (89) croisant les enroulements supérieures (90) sur le côté inférieur dans l'espace ouvert (88) d'un bobine inférieure (74), et que, dans l'interstice entre deux colonnes (70,71) ou lignes des bobines supérieures (62,65;63,66), la piste conductrice (89), connectée au travers à nouveau, est connectée à une piste conductrice (92) passant entre les deux colonnes supérieures (70,71) ou lignes des bobines (62,65 ;63,66), les pistes conductrices pour les raccordements (78-82) des bobines (62-67 ;74-77) étant guidées occasionnellement au-delà du bord de la disposition de bobines et se terminant par paires à une bande de contact au bord (83) du substrat (1), et chacune bobine (62-67 ;74-77) étant connectée individuellement, contrôlée par un microprocesseur (102) d'un circuit électrique qui est connecté à la bande de contact, dans laquelle, pour chacune bobine, une coupure de piste conductrice d'une raccordement qui est court-circuitée par une condensateur est prévue entre la bande de contact et le bord de la disposition de bobines si bien que un circuit oscillant est formé en combinaison avec la bobine respectivement.

2. Disposition de bobines selon la revendication 1, **caractérisée en ce que** le centre (13) de la surface qui est définie par quatre bobines adjacentes (17-20) d'une matrice (6) étant arrangée en deux lignes (7,14) et deux colonnes (15,16) et le centre (13) de l'espace ouvert (12) de la bobine (10) de l'autre matrice (2) qui est chevauchée par les quatre bobines (17-20) sont disposés sur un axe commun de sorte que les enroulements (21-24) des quatre bobines (17-20) traversent par sections l'espace ouvert (12) de la bobine chevauchée (10) et les enroulements (21-24) des quatre bobines (17-20) se croisent deux fois complètement dans une projection avec les enroulements (11) de la bobine chevauchée (10) respectivement.

3. Disposition de bobines selon l'une ou plusieurs des revendications précédentes, **caractérisée en ce que** les lignes (3,32 ;7,14) et les colonnes (4,27 ;8,30) sont espacées également respectivement, qu'un premier axe de symétrie (26) d'une colonne (27) des bobines (28) d'une première matrice (2) coïncide avec la ligne centrale (29) entre deux colonnes (8,30) des bobines de la deuxième matrice (6), et qu'un deuxième axe de symétrie (31) d'un ligne (32) des bobines (10) de la première matrice (2) coïncide avec la ligne centrale (33) entre les lignes (7,14) des bobines de la deuxième matrice (6).

4. Disposition de bobines selon l'une ou plusieurs des revendications précédentes, **caractérisée en ce que** les bobines (5,9) sont formées comme des polygones.

5. Disposition de bobines selon l'une ou plusieurs des revendications précédentes, **caractérisée en ce que** le couplage électrique entre des quatre bobines (17-20) d'une matrice (6) et la bobine (10) de l'autre matrice (2) qui est chevauchée par les quatre bobines (17-20) est calculée moins à 3%.

6. Disposition de bobines selon l'une ou plusieurs des revendications précédentes, **caractérisée en ce que** les raccordements extérieures (35) des bobines (10) d'un colonne (35) d'une première matrice (2) sont connectés par une piste conductrice commune (37) sur le substrat (1), et que les raccordements intérieures (38) des bobines (10) d'un ligne (32) de la première matrice (2), connectée au travers du substrat (1), sont connectées par une piste conductrice inférieure (39).

7. Disposition de bobines selon l'une ou plusieurs des revendications précédentes, **caractérisée en ce que** les raccordements extérieurs (41) des bobines (20) d'une colonne (16) de la deuxième matrice (6), connectée au travers, sont connectés à la piste conductrice (7) sur le substrat (1) qui connecte les raccordements extérieurs (35) des bobines (10) de la première matrice (2), que les raccordements intérieurs (41) des bobines (17) d'un ligne (15) de la deuxième matrice (6), chacune connectée au travers, sont connectés à une piste conductrice supérieure (7) sur le substrat (1) dans un espace ouvert (12) d'une bobine (10) de la première matrice (2), que les pistes conductrices (42) pontent les enroulements inférieures (21) de la bobine respective (17) et, chacune connectée au travers encore une fois, sont connectées à une piste conductrice inférieure (43) sur le substrat (1), la piste conductrice ensuite connectant les raccordements intérieurs des bobines de cette ligne (7) de la deuxième matrice (6).

8. Disposition de bobines selon l'une ou plusieurs des revendications précédentes, **caractérisée en ce qu'**une ligne (47) des bobines (49) a un raccordement commun respectivement et une colonne (50) des bobines (49) a un raccordement commun respectivement, et que les raccordements communs ont un interrupteur (48, 51) respectivement.

9. Disposition de bobines selon l'une ou plusieurs des revendications précédentes, **caractérisée en ce qu'**une première matrice a I-lignes et J-colonnes, que la deuxième matrice a (1+1)-lignes et (J+I)-colonnes, et que le centre des deux matrices est disposé sur un axe commun.
